Europäisches Patentamt

European Patent Office

Office européen des brevets

(11) Numéro de publication : **0 007 411**
**B1**

(12) **FASCICULE DE BREVET EUROPÉEN**

(45) Date de publication du fascicule du brevet :
24.02.82

(21) Numéro de dépôt : 79101855.9

(22) Date de dépôt : 09.06.79

(51) Int. Cl.³ : **B 65 B   3/28**, G 01 G   1/04//
**A23G9/28**

(54) **Mécanisme de dosage et d'équilibrage.**

(30) Priorité : 20.07.78 FR 7821507

(43) Date de publication de la demande :
06.02.80 (Bulletin 80/03)

(45) Mention de la délivrance du brevet :
24.02.82 Bulletin 82/08

(84) Etats contractants désignés :
AT BE CH DE GB IT LU NL SE

(56) Documents cités :
US - A - 3 137 358
US - A - 2 354 087

(73) Titulaire : SOCIETE DES PRODUITS NESTLE S.A.
Case postale 353
CH-1800 Vevey (CH)

(72) Inventeur : Launay, Noel
15, rue bossuet
F-60000 Beauvais (FR)

Imprimerie Jouve, 18, rue St-Denis, 75001 Paris, France

# 0 007 411

## Mécanisme de dosage et d'équilibrage

La présente invention concerne un mécanisme de dosage en quantité de produits en vrac déversés dans des récipients, applicable notamment à des machines de remplissage de sorbetières avec de la crème glacée.

Les machines de remplissage de récipients destinés à recevoir des produits, comme par exemple de la crème glacée, et ci-après désignés sous le nom de sorbetières, actuellement connues, comportent en général un transporteur à avance mécanique sur lequel sont placées les sorbetières à remplir, et dont la marche est périodiquement interrompue pour permettre à chacune des sorbetières successives d'être immobilisée en dessous de l'organe de remplissage, ce dernier ne débitant de crème glacée qu'entre le moment où la sorbetière est immobilisée en dessous de lui et celui où, ladite sorbetière étant remplie, l'écoulement de la crème glacée est interrompu, le transporteur étant alors remis en marche pour, d'une part évacuer la sorbetière remplie et amener la suivante en dessous de l'organe de remplissage, et ainsi de suite, l'écoulement de la crème étant interrompu pendant l'espace de temps durant lequel cette nouvelle sorbetière est acheminée jusqu'à cet organe.

Sur les machines à cadence élevée, c'est-à-dire celles dont la capacité maximum de remplissage est d'environ 1 000 sorbetières remplies par heure, la crème glacée qui ne s'écoule pas pendant la durée de l'échange entre une sorbetière venant d'être remplie et la sorbetière vide suivante, est emmagasinée et accumulée dans un réservoir formant tampon. Mais cette façon de procéder présente l'inconvénient de provoquer, durant l'accumulation dans le réservoir tampon entre deux remplissages, une compression de la crème glacée qui est néfaste au foisonnement. En outre, les techniques ci-dessus décrites sont pratiquement inapplicables aux glaces dites dures, c'est-à-dire celles dont la température est inférieure à environ − 9 °C.

D'un autre côté, la contre-pression permettant à la crème glacée de s'étaler sur toute la surface de la sorbetière pendant le remplissage, contre-pression obtenue par des procédés mécaniques ou pneumatiques, ne tient pas compte du poids de crème glacée et de ses variations, au cours du remplissage de la sorbetière.

La présente invention obvie à ces inconvénients en fournissant un mécanisme de dosage de la quantité de produit en vrac, notamment de dosage de la quantité de crème glacée, coopérant avec une machine de remplissage de manière telle qu'aucune interruption dans l'écoulement du produit de remplissage n'est nécessaire et que, de cette manière, il devienne notamment possible d'accroître la capacité horaire de remplissage et de supprimer pratiquement la compression du produit néfaste au foisonnement souhaité. Une telle machine permet le remplissage de sorbetières avec des crèmes glacées dont la température est inférieure à environ − 9 °C et, en outre, de compenser constamment en cours de remplissage l'effet de l'augmentation du poids de la sorbetière vis-à-vis de la contrepression, ce qui permet l'étalement de la crème glacée sur toute la surface de la sorbetière pendant son remplissage.

Le dispositif de dosage et d'équilibrage selon l'invention comprend, de manière connue (par exemple par le brevet USA No. 3.137.358) un balancier mobile en rotation autour d'un axe horizontal fixe par rapport au bâti de la machine et formant un levier du premier genre, sur l'extrémité du premier bras duquel prend appui l'extrémité d'une tige verticale guidée en translation axiale et dont l'autre extrémité est solidaire de la face inférieure du plateau de réception du récipient en cours de remplissage ; le second bras est formé en deux parties articulées l'une sur l'autre, la première étant directement solidaire du premier bras et mobile, en même temps que lui, en rotation autour de l'axe du balancier ; à son extrémité libre, cette première partie du second bras est munie d'une glissière dans laquelle peut coulisser un contrepoids articulé en rotation autour d'un axe horizontal parallèle à l'axe du balancier. Le palier qui forme le support du contrepoids est muni de moyens lui permettant de coulisser dans ladite glissière, et est lié à une pièce qui forme la seconde partie du second bras du balancier et qui comporte, à son extrémité libre opposée à celle munie dudit palier, un coulisseau mobile en translation le long d'un guide rectiligne ; ce guide rectiligne, qui est disposé dans un plan perpendiculaire aux axes de rotation du balancier et du contrepoids, a une inclinaison de valeur prédéterminée, fonction de la quantité de produit à déverser dans chaque récipient. En outre, les longueurs des bras des balanciers, d'une part, le poids du contrepoids et l'inclinaison de la rampe rectiligne coopérant avec le second bras, d'autre part, sont choisis et calculés de telle manière que les moments des forces agissant sur chacun desdits bras soient, à tout instant, sensiblement égaux.

Ainsi, à chaque position du balancier correspond un poids déterminé de produit dans le récipient en cours de remplissage.

Afin de permettre l'adaptation d'un dispositif de dosage et d'équilibrage aux différentes éventualités, c'est-à-dire son adaptation tant à la valeur de la densité du produit de remplissage qu'à celle de la quantité de produit dont le récipient doit être rempli, l'inclinaison de la rampe rectiligne coopérant avec le second bras du balancier du dispositif de dosage et d'équilibrage de la charge des récipients en cours de remplissage est rendue réglable. A cet effet, et dans une forme de réalisation particulière, l'extrémité inférieure de ladite rampe est articulée en rotation autour d'un axe fixe, parallèle à l'axe de rotation du balancier, tandis que son extrémité supérieure formant glissière coopère à la fois avec un coulisseau mobile le long d'une glissière horizontale rectiligne d'axe orthogonal à l'axe de rotation du balancier dont

2

la position est réglable et, par l'intermédiaire d'un organe solidaire du coulisseau et mobile en rotation autour d'un axe fixe par rapport à celui-ci, lequel axe reste parallèle à l'axe de rotation du balancier, avec un chemin de guidage rectiligne ménagé sur ledit organe.

Une machine de remplissage munie du mécanisme de dosage selon l'invention comporte, par exemple : un moyen d'acheminement pas à pas des récipients à une station de remplissage, des moyens de distribution desdits récipients alternativement jusque sous un premier organe d'écoulement du produit de remplissage et jusque sous un second organe d'écoulement du produit de remplissage, et un moyen d'acheminement de chaque récipient, rempli d'une quantité de valeur prédéterminée de produit, jusqu'à un moyen d'évacuation, chacun des deux organes de remplissage étant disposé en regard d'un plateau de réception et de support de récipient. Ce plateau coopère avec le dispositif selon l'invention de dosage et d'équilibrage à tout instant pendant le remplissage de la charge totale du récipient, ce dispositif coopérant lui-même avec un organe de blocage de ce même dispositif de dosage et d'équilibrage dans la position correspondant au remplissage d'un récipient contenant la quantité prédéterminée de produit de remplissage. Les différents moyens mis en application pour l'obtention des différents mouvements coopèrent entre eux de manière programmée par l'intermédiaire d'organes de réalisation des différentes fonctions logiques coordonnant la marche et le fonctionnement de vérins hydrauliques de commande des différents mouvements, de telle manière qu'un récipient sur deux soit constamment en cours de remplissage.

Les caractéristiques et avantages de l'invention ressortiront mieux de la description faite ci-après à titre d'exemple non limitatif, d'une forme possible de réalisation de ladite invention et en regard des dessins annexés.

Sur ces dessins :

la figure 1   représente une vue de côté isolée du mécanisme de dosage selon l'invention ;

la figure 2   représente une vue de côté d'une machine comportant le mécanisme de dosage selon l'invention de la figure 1 et incorporé dans ladite machine ;

la figure 3   représente une vue de la machine de la figure 2 suivant l'axe III-III de la figure 2 ;

les figures 4 et 5   représentent respectivement un schéma explicatif du fonctionnement du dispositif de dosage et une courbe de fonctionnement de celui-ci ; et

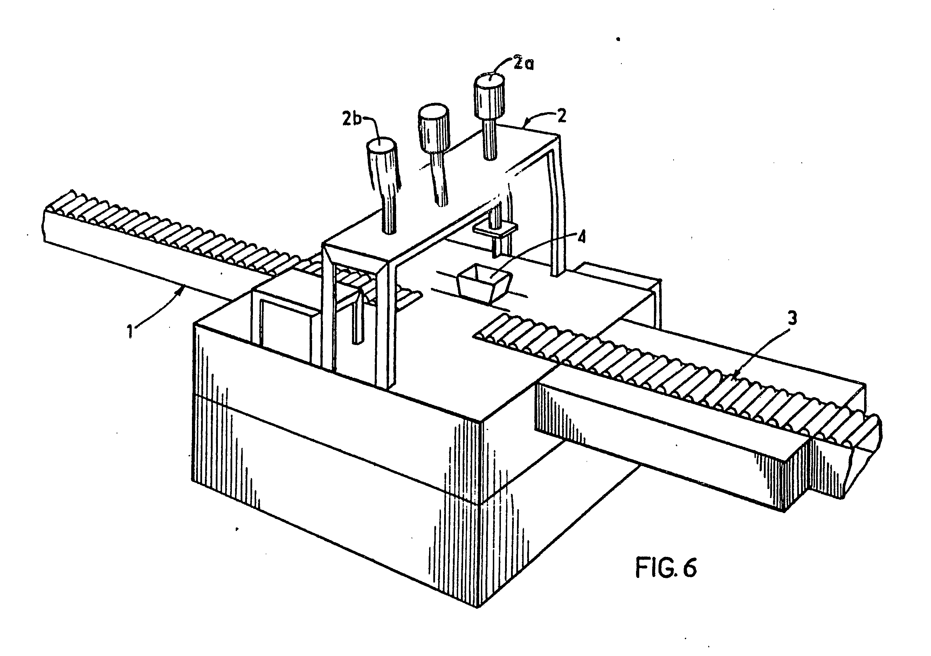

la figure 6   représente une vue schématique partielle en perspective de l'ensemble d'une machine de remplissage comportant le mécanisme de dosage selon l'invention.

Sur ces figures, les mêmes références représentent les mêmes éléments.

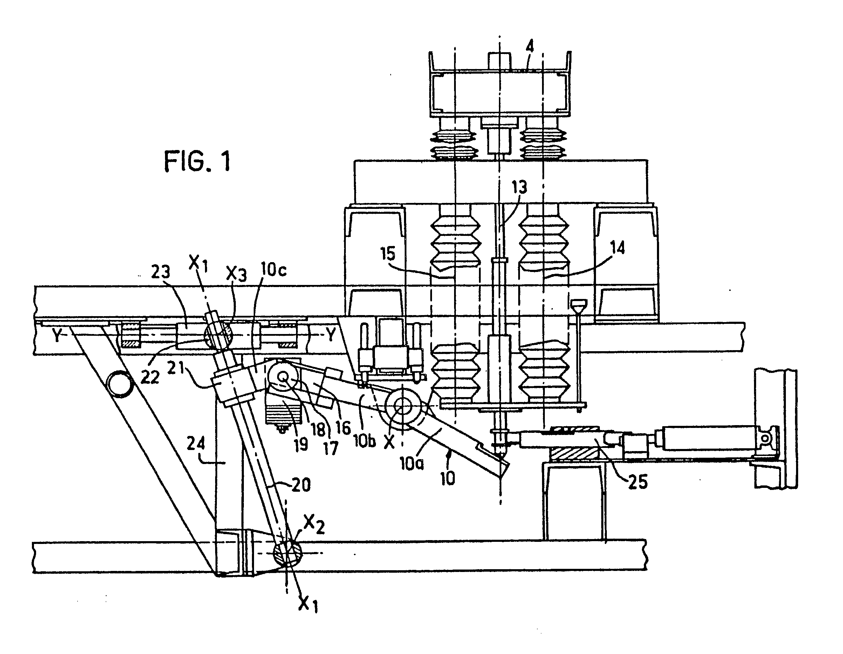

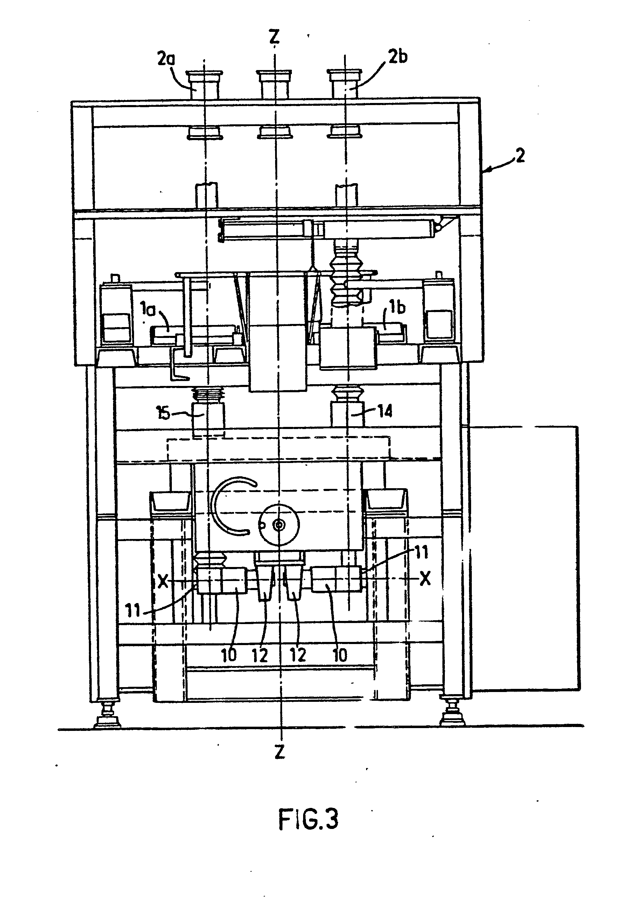

En se référant tout d'abord aux figures 1, 2 et 3, une machine de remplissage comportant le mécanisme de dosage selon l'invention comporte essentiellement un premier moyen de transport 1 pour l'amenée un par un des récipients de réception du produit c'est-à-dire, notamment, des sorbetières de réception de crème glacée, jusqu'au poste de remplissage 2 et un moyen d'évacuation continu 3 des sorbetières remplies d'une quantité de valeur prédéterminée en poids de produit. Le moyen de transport 1 est avantageusement constitué par un convoyeur à deux éléments 1a, 1b à avancement pas à pas de type connu ; la longueur d'un pas dépend, notamment, des dimensions des sorbetières, tandis que l'intervalle séparant deux pas successifs est fonction de la durée du remplissage. Les sorbetières 4 qui sont déposées à partir d'un poste de distribution (non représenté) sur le convoyeur d'entrée, en général manuellement, sont marquées automatiquement en passant devant un poste de marquage automatique (non représenté) synchronisé de manière connue avec ledit convoyeur d'entrée et acheminées jusqu'à l'entrée du poste de remplissage 2 où sont disposées deux vannes d'alimentation 2a et 2b des sorbetières en crème glacée à partir d'un réservoir de congélation (non représenté).

Lorsqu'une sorbetière est présentée par le transporteur 1, sa présence est détectée par un organe de détection de type connu, par exemple une cellule photosensible et marquée ; suivant son marquage elle est acheminée au moyen d'un vérin à fluide sous pression soit jusqu'à un premier plateau formant support de ladite sorbetière et disposé en dessous d'une des deux vannes de déversement, soit jusqu'à un second plateau situé au même niveau que le premier en position de repos, formant support de la sorbetière et disposé en dessous de la seconde vanne de déversement du produit. A cet effet, dans un premier temps, la sorbetière concernée est élevée, au moyen d'un plateau auxiliaire, jusqu'au niveau du plateau de réception et de support des sorbetières, entraîné par un vérin à fluide sous pression (non représenté). Arrivée au niveau commun aux deux plateaux de réception, la sorbetière est poussée jusque sur le plateau auquel elle est destinée par un vérin dont le fonctionnement, en vue de la poussée de la sorbetière sur l'un ou l'autre desdits plateaux, est déterminé par un organe de commande associé à un capteur de signaux, lequel enregistre les signaux fournis par le marquage préalable des sorbetières.

Chacun des plateaux de réception des sorbetières coopère avec le dispositif selon l'invention de dosage et d'équilibrage des sorbetières placé à l'intérieur d'un coffret protecteur. Ces deux dispositifs identiques fonctionnent comme indiqué ci-après et sont synchronisés et programmés de telle façon que constamment l'une des deux sorbetières soit en cours de remplissage sans qu'il y ait à aucun moment d'interruption dans le débit du produit de remplissage.

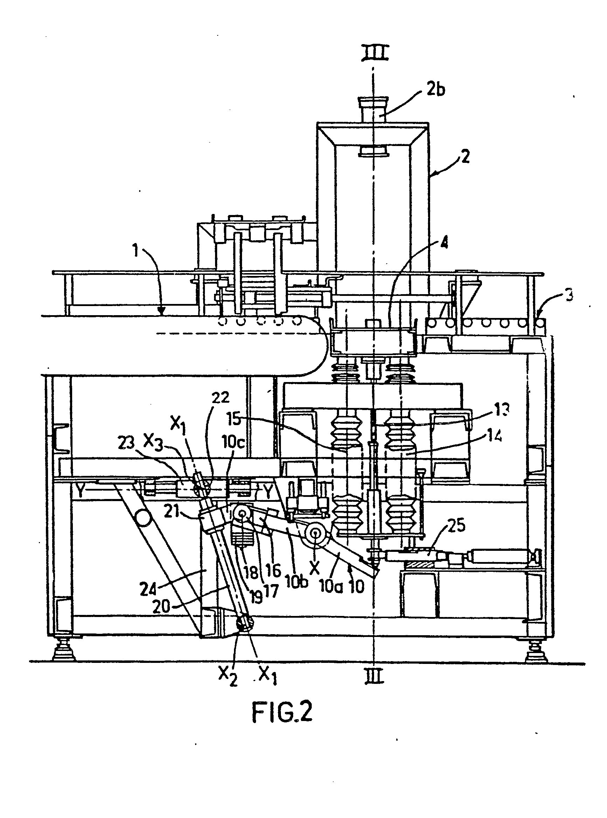

Chacun des deux dispositifs selon l'invention de dosage et d'équilibrage, plus spécialement représenté sur les figures 1 et 2 et destiné à obtenir un dosage rigoureux de la quantité de crème glacée à admettre dans la sorbetière correspondante ou plus généralement la quantité de produit à admettre dans le récipient correspondant, est constitué essentiellement par un balancier 10 constitué par un levier dit du

3

premier genre, c'est-à-dire à deux bras 10a et 10b solidaires l'un de l'autre, disposés de part et d'autre d'un axe fixe X-X et mobiles en rotation autour d'un axe passant par le point A. Ce levier, mobile en rotation autour de l'axe X-X fixe par rapport au châssis inférieur de la machine, comporte les bras 10a et 10b disposés de part et d'autre de cet axe matérialisé par chacun des paliers 11 et 12, les deux dits bras étant solidarisés entre eux. Le premier de ces bras est monobloc tandis que le second est formé de deux parties 10b et 10c. La partie supérieure de l'extrémité du premier, c'est-à-dire le bras 10a, prend appui sur l'extrémité d'une tige verticale 13 mobile en translation axiale et guidée à cet effet dans un ensemble de deux glissières fixes par rapport au châssis inférieur, 14 et 15, munies de soufflets de protection, l'autre extrémité formant le support du plateau de réception d'une sorbetière en cours de remplissage.

Les extrémités en contact tant de la tige verticale 13 que du bras 10a sont réalisées par tout moyen connu approprié de manière que le déplacement de l'une sur l'autre ne donne lieu qu'à un frottement aussi faible que possible.

A l'extrémité du second bras de levier 10b, opposée à l'axe de rotation X-X, est ménagée une glissière 16 dans laquelle peut se déplacer longitudinalement le coulisseau 17 dont est munie la seconde partie 10c du second bras, laquelle seconde partie, d'une part, comporte un palier 18 dont l'axe recoupe perpendiculairement l'axe de la glissière et dans lequel peut tourner librement autour dudit axe l'arbre support d'un contrepoids 19 et, d'autre part, peut se déplacer le long d'une rampe rectiligne 20 au moyen d'une glissière 21 de forme appropriée à celle du contour dudit guide rectiligne. Celui-ci est constitué par une tige dont l'axe longitudinal X1-X1 est dans un plan vertical perpendiculaire à l'axe X-X et articulée d'une part à son extrémité inférieure autour d'un axe de rotation fixe X2-X2 disposé dans la partie inférieure du châssis de la machine et parallèle aux précédents et, d'autre part, à l'extrémité supérieure opposée, autour d'un axe de rotation X3-X3, parallèle à l'axe X2-X2, mais dont on peut régler la position entre deux points d'emplacements prédéterminés d'une droite horizontale Y-Y fixe, orthogonale à l'axe fixe X2-X2, ce qui permet de donner une inclinaison de valeur prédéterminée audit guide. A cet effet, l'extrémité de ladite tige articulée sur l'axe X3-X3 est formée par un coulisseau mobile en translation sur une glissière ménagée dans une pièce 22, mobile librement en rotation autour de l'axe X3-X3 et disposée sur un coulisseau 23 mobile en translation le long de l'axe Y-Y entre les deux points extrêmes ci-dessus mentionnés et blocable au moyen de tout organe de type connu approprié dans toute position choisie à volonté entre les deux dits points extrêmes.

La machine de remplissage comporte deux de ces dispositifs qui sont symétriques l'un de l'autre par rapport au plan longitudinal médian Z-Z de la machine, mais restent indépendants l'un de l'autre quant au fonctionnement purement mécanique, les leviers correspondants étant respectivement articulés comme représenté sur la figure 2, d'une part, sur un montant vertical 24 du châssis inférieur de la machine et, d'autre part, sur le palier 11 et 12, les arbres coaxiaux correspondants étant séparés l'un de l'autre entre les deux dits paliers.

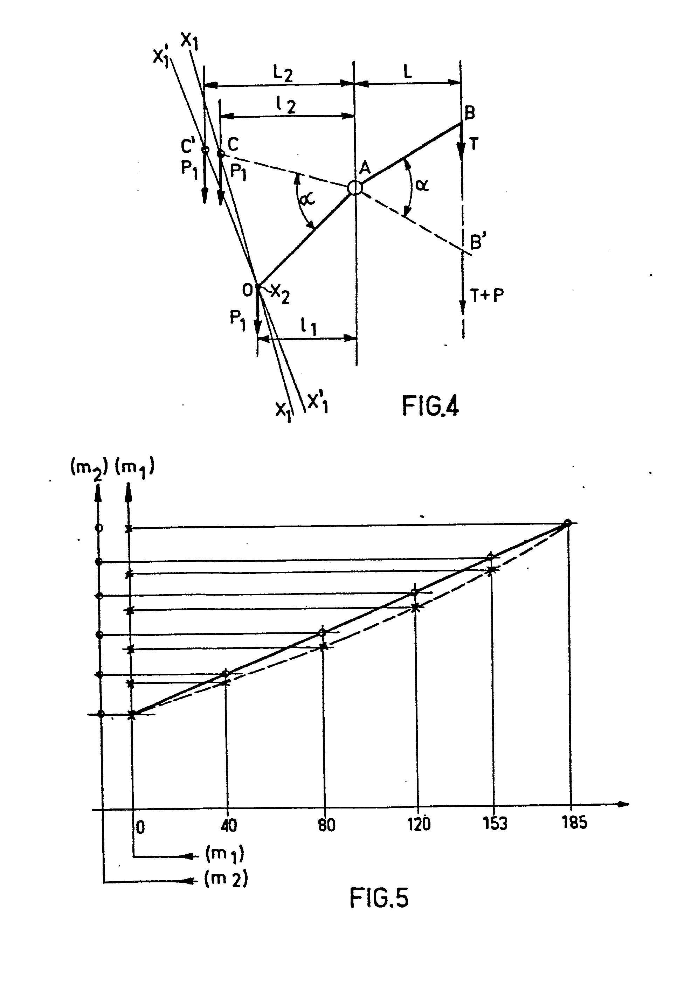

On a représenté sur la figure 4 le schéma de fonctionnement de chacun des deux ensembles formant dispositif d'équilibrage. Si l'on désigne par AB et AC les axes des deux bras d'un des leviers 10, le point A étant le point d'articulation dudit levier, la distance AB représente la longueur du bras 10a à tout instant lors de son déplacement, c'est-à-dire la longueur comprise entre le point A et le point B, point de contact de l'extrémité de la tige 13 et du méplat ménagé sur l'extrémité dudit bras, tandis que la distance AC représente la distance du point A au point C de l'axe longitudinal X1-X1 du guide rectiligne 20 avec lequel coïncide à tout instant le centre de la glissière 21 mobile en translation rectiligne le long du guide 20. La longueur de ce bras AC varie donc constamment lorsque, le levier tournant autour de son axe de rotation, le palier portant l'axe du contrepoids coulisse sur l'extrémité du bras du levier. Ainsi, lors du remplissage d'une sorbetière placée sur un des supports et dont, par conséquent, le poids total et par suite la force s'exerçant à l'extrémité du bras 10a par l'intermédiaire de la tige verticale 13, va en augmentant au fur et à mesure que la sorbetière se remplit ; d'une part, la longueur du bras de levier AB varie du fait que l'emplacement de son extrémité varie elle-même, tandis que la distance séparant l'axe horizontal de rotation X-X dudit levier de l'axe longitudinal de la tige 13 reste constante ; d'autre part, en raison de l'inclinaison variable du guide rectiligne 20, la distance séparant l'axe X-X de son axe longitudinal X1-X1 est variable.

Lorsqu'aucune sorbetière vide n'est placée sur le plateau récepteur, la glissière porte-contrepoids 21 se trouve en bas du guide rectiligne en O, tandis que l'extrémité du premier bras 10a se trouve au point B dans la position la plus élevée qu'il puisse occuper.

La force qu'exerce alors l'ensemble lié au plateau porte-sorbetière sur l'extrémité B du premier bras de levier est la force T résultante du poids du plateau et de la tige verticale associée, de celui de la sorbetière vide et du poids dudit premier bras tandis que l'effort P1 s'exerçant sur le second bras du levier est égal au poids du contrepoids augmenté du poids de l'ensemble du mécanisme formant ledit second bras. Si L est la distance séparant l'axe de rotation du levier de l'axe vertical de la tige, l1 la distance séparant le point O ci-dessus désigné de ce même axe de rotation, les moments des forces T et P1 par rapport à cet axe de rotation sont respectivement égaux à $T \times L$ et à $P1 \times l1$. Quand le poids de la sorbetière augmente du fait de son remplissage progressif par de la crème glacée, à chaque quantité de produit emmagasiné dans le récipient, c'est-à-dire à chaque poids de produit emmagasiné, correspond une position d'équilibre de l'ensemble du levier du fait de l'inclinaison du guide 20 et de la montée du second bras de levier et par suite de la glissière porte-contrepoids 21 le long de ce guide, consécutive à la descente du premier bras sous l'effet de l'effort exercé sur son extrémité. Ainsi, au cours de la descente du premier bras 10a et donc de la montée du second 10b, le système tout entier reste sensiblement équilibré. Lorsque le remplissage de la sorbetière est terminé, c'est-à-dire lorsque celle-ci a reçu un poids P de valeur prédéterminée de produit, un nouvel état d'équilibre est atteint, dans lequel le point initialement en B se trouve en B', tandis que le point initialement en O est venu en C, lequel est situé sur un axe vertical se trouvant à la distance l2 de l'axe de rotation du levier, les moments des forces agissant sur le premier et second bras étant alors respectivement $(T + P) \times L$ et $P1 \times l2$ et, en outre égaux entre eux, si bien que : $(T + P) \times L = P1 \times l2$, égalité dans laquelle $T$, $L$ et $P1$ sont des constantes liées à la machine alors que $P$, qui représente le poids de produit de remplissage de la crème glacée dans le cas présent, peut être variable, mais est déterminée de manière précise pour chaque type de sorbetière à remplir et que l2, qui représente l'écartement entre l'axe A de rotation du levier et la verticale du point C, peut être modifiée en agissant sur l'inclinaison du guide rectiligne 20 ; on a représenté, à titre d'exemple, l'axe X'1-X'1 qui pourrait être celui du guide incliné d'une manière qui correspondrait à une autre valeur de la quantité de produit total emmagasinée dans la sorbetière. Ainsi, les grandeurs P et l2 sont liées entre elles par une relation linéaire. Autrement dit, à toute valeur du poids $P$ correspond une valeur de l2 pour des valeurs données de T, L et P1 pour une machine de caractéristiques données. Il est donc nécessaire, pour que le système reste en équilibre pour les différentes valeurs du poids P, de donner à l'axe longitudinal X1-X1 du guide 20 une inclinaison correspondant à ce poids P. Toutefois, il est clair que, comme au cours du remplissage de la sorbetière la trajectoire de la pièce porte-contrepoids est rectiligne, l'égalité entre les moments des forces appliquées sur chacun des deux bras du levier n'est pas rigoureusement réalisée, cette égalité n'étant réalisée qu'en fin d'opération, c'est-à-dire lorsque la sorbetière est remplie d'une quantité de produit de poids P et que les extrémités B et C des bras de leviers tels que ci-dessus référencés, occupent respectivement les positions B' et C. Dans les positions intermédiaires, le moment par rapport à l'axe de rotation des forces appliquées au second bras de levier 10b, c'est-à-dire du côté du contrepoids, est en fait un peu supérieur à celui des forces appliquées au premier (10a), c'est-à-dire du côté de la sorbetière. Cette différence, que le graphique de la figure 5 représente à titre d'exemple non limitatif, montre les différentes valeurs des moments des forces s'exerçant respectivement sur le bras 10a ($m1$) et sur le bras 10b ($m2$), en fonction de l'enfoncement progressif représenté en abcisses de la sorbetière au fur et à mesure de son remplissage, permet à l'ensemble du système de résister à la pression de sortie du produit sur cette sorbetière.

A titre d'exemple, on indique ci-après des valeurs simultanément possibles pour certains éléments du dispositif d'équilibrage pour lequel ont été établis le graphique de la figure 5 et le tableau ci-dessous :

AB = 185 mm     AC = 200 mm
T  = 8 kg        $P_1$ = 9,064 kg

Les quantités de produits de remplissage peuvent être comprises entre 3,390 kg au moins et 4,038 kg au plus. Dans l'exemple choisi, ce poids est le poids minimum, c'est-à-dire de 3,390 kg, la valeur de la distance L étant alors de 160 mm et l'angle dont tourne le bras AB étant de 60°, ledit bras étant dans sa position d'origine incliné de 30° sur l'horizontale. Par ailleurs, dans la position initiale du levier, l'extrémité O du second bras est placé de telle manière que la distance L1 soit égale à 141 mm. Après remplissage de la sorbetière ce second bras est venu occuper, après une rotation de $\alpha = 60°$, la position AC telle que la distance L2 du point C à la verticale de l'axe de rotation soit égale à 201,3 mm, la longueur dudit second bras étant alors de AC = 210,3 mm (dans le cas où le poids P de produit emmagasiné dans la sorbetière est le poids maximum, c'est-à-dire 4,038 kg, l'inclinaison de l'axe longitudinal du guide de la pièce porte-contrepoids est telle que l'extrémité du second bras du levier vienne en fin de remplissage occuper la position C' telle que sa distance L2 à la verticale de l'axe de rotation soit de 212,8 mm, la longueur AC' étant alors de 220,4 mm). Le tableau ci-dessous donne à titre d'exemple, dans le cas d'une crème glacée à la fraise, les valeurs des moments des forces s'exerçant, sur le bras de levier du côté de la sorbetière (colonne 2) et sur le bras de levier du côté contrepoids (colonne 3) en fonction de la course de la sorbetière (colonne 1) ainsi que la différence entre deux valeurs correspondantes de ces moments (colonne 4) et la valeur de l'effort minimum théorique correspondant dû à la pression s'exerçant sur la crème glacée (colonne 5).

| (1) | (2) | (3) | (4) | (5) |
|---|---|---|---|---|
| Course sorbetière | Moment des forces côté sorbetière | Moment des forces côté contrepoids | Différence entre (3) et (2) | Effort théorique minimum sur crème glacée |
| (mm) | (m/kg) | (m/kg) | (m/kg) | (g) |
| 0 | 1,281 | 1,281 | 0 | 0 |

# 0 007 411

Suite

| (1) | (2) | (3) | (4) | (5) |
|-----|-----|-----|-----|-----|
| Course sorbetière | Moment des forces côté sorbetière | Moment des forces côté contrepoids | Différence entre (3) et (2) | Effort théorique minimum sur crème glacée |
| (mm) | (m/kg) | (m/kg) | (m/kg) | (g) |
| 40 | 1,373 | 1,395 | 0,022 | 137 |
| 80 | 1,478 | 1,511 | 0,033 | 205 |
| 120 | 1,589 | 1,628 | 0,039 | 243 |
| 153 | 1,691 | 1,727 | 0,036 | 224 |
| 185 | 1,824 | 1,824 | 0 | 0 |

Lorsque la sorbetière est remplie de la quantité, c'est-à-dire du poids de produit prédéterminé, prévue et que, par suite, le niveau du plateau de remplissage, donc l'extrémité de la tige qui lui est liée, s'est abaissée de la hauteur prédéterminée correspondante, cet ensemble est bloqué pour permettre l'évacuation de la sorbetière hors de son plateau support et son acheminement jusqu'à l'organe d'évacuation et de transport de ladite sorbetière. A cet effet, un organe de blocage, constitué avantageusement par un vérin hydraulique 25, dont l'extrémité de la tige, lorsqu'elle est en position d'extension totale, vient s'emboîter dans un logement prévu à cet effet à l'extrémité de la tige 13 et formé, par exemple, par l'espace compris entre deux collerettes ménagées sur la tige porte-plateau de remplissage et espacées entre elles d'une distance égale à l'épaisseur de l'extrémité de la tige du vérin. L'extension complète de la tige du vérin de blocage est commandée de manière connue par l'intermédiaire d'un contact manœuvré par la tige porte-plateau de remplissage correspondante.

Dès que cette dernière se trouve en position de blocage, c'est-à-dire lorsque le levier du dispositif de remplissage se trouve en équilibre dans la position où les moments des forces appliquées à chacun de ses bras sont égaux, la tige du vérin de blocage, à son tour, actionne un contact de commande de l'arrêt du déversement de la crème glacée dans la sorbetière et de commande de la mise en extension de la tige du vérin hydraulique d'évacuation hors du plateau de remplissage de la sorbetière remplie et d'amenée de celle-ci au convoyeur d'évacuation des sorbetières pleines vers le poste d'emballage. Par l'intermédiaire de contacts analogues aux précédents et eux-mêmes actionnés par les tiges des vérins correspondants, lorsqu'elles se trouvent dans des positions convenables prédéterminées, les différents vérins prévus pour les différents déplacements des sorbetières prennent les positions désirées correspondantes. C'est ainsi que, lorsque la sorbetière qui vient d'être remplie sur un plateau de remplissage a été poussée sur le transporteur d'évacuation, la tige du vérin correspondant actionne le contact de commande du retrait de la tige de blocage du levier du dispositif de remplissage, ce qui a pour effet de libérer ledit levier et de lui permettre, sous l'action du contrepoids, de tourner en sens contraire du précédent et de provoquer ainsi la remontée de la tige porte-plateau correspondante donc également celle dudit plateau. En fin de course de ladite tige porte-plateau sous l'effet de la mise en extension de la tige du vérin correspondant, extension commandée par l'intermédiaire d'un contact actionné par la tige porte-plateau, une sorbetière est poussée sur ce même plateau, tandis que, dès que cette sorbetière y a été mise en place, l'organe de déversement de la crème glacée dans cette même sorbetière s'ouvre pour le remplissage de cette dernière jusqu'à ce que, le poids de produit déversé étant atteint, la suite des opérations ci-dessus décrites se répète dans le même ordre.

Ces mêmes opérations se succèdent bien entendu, de la même manière et dans le même ordre dans le second poste de remplissage qui est identique au premier et comporte les mêmes éléments. En outre, les différents organes de mise en mouvement des sorbetières, soit pour leur distribution, soit pour leur évacuation, constitués, comme dit plus haut, de vérins hydrauliques, les organes de blocage constitués eux aussi par des vérins, les vannes de commande de l'ouverture et de la fermeture des organes de remplissage desdites sorbetières, ainsi que les organes d'entraînement des différents transporteurs sont, quant à leur marche et leur mise en fonctionnement, d'une part, coordonnés et synchronisés entre eux dans chaque ensemble de remplissage de sorbetière, tandis que les deux dits ensembles sont, d'autre part, coordonnés entre eux de telle manière que, lorsqu'une sorbetière en situation de remplissage a reçu la quantité de produit prévue et que, par suite, le dispositif de dosage est bloqué, l'écoulement de produit dans ladite sorbetière se trouve interrompu par fermeture de la vanne d'écoulement correspondante, cette fermeture entraînant l'ouverture immédiate de la vanne de l'autre organe de remplissage au-dessous duquel se trouve, sur le plateau correspondant, la sorbetière qui y a été acheminée pendant le remplissage de la précédente, l'ensemble des opérations étant interrompu si pour une raison quelconque l'acheminement de ladite sorbetière n'a pas été réalisé pendant le remplissage de l'autre.

La coordination et la synchronisation de ces divers mouvements, opérations et cycles d'opérations est réalisée de manière connue au moyen de relais à commande pneumatique, les uns à deux positions et trois orifices, les autres à deux positions et cinq orifices, connectés à des organes pneumatiques de réalisation de fonctions logiques telles que les fonctions « ET », « OU » (inclusif) et la fonction « inhibition », de manière programmée permettant l'obtention automatique des résultats techniques ci-dessus mentionnés. L'ensemble des connexions et organes de commande de ces différents éléments sont avantageusement groupés dans une armoire commune, munie d'un pupitre de commande.

La machine de remplissage ci-dessus décrite, munie d'un équipement de commandes des diverses opérations et d'automatismes entièrement pneumatique permet, en même temps qu'une synchronisation automatique du débit de déversement de la crème glacée, un remplissage des sorbetières étalé sur deux postes de déversement ; en effet, les sorbetières 4 sont présentées parallèlement, ce qui permet de n'avoir aucune interruption dans l'écoulement du flot de crème glacée dont la densité et le coefficient de foisonnement restent dès lors homogènes, puisque la fermeture d'une vanne d'alimentation sur un poste de remplissage entraîne automatiquement l'ouverture de la vanne d'alimentation du poste de remplissage disposé en parallèle, une telle possibilité ayant pour effet une augmentation importante du débit par unité de temps. En outre, pareille disposition permet de donner à la tuyauterie des dimensions telles que l'écoulement d'une crème glacée à basse température, donc de viscosité importante, soit rendu possible.

Par ailleurs, le dispositif d'équilibrage et de dosage à balancier, dont le contrepoids se déplace le long d'une rampe inclinée, permet de compenser constamment l'augmentation du poids de la sorbetière en remplissage, lequel agit par l'intermédiaire de la tige liée au plateau porte-sorbetière sur le premier bras du balancier.

De plus, la rampe, le long de laquelle se déplace le contrepoids d'équilibrage ayant une inclinaison que l'on peut faire varier par commande manuelle et repérable, permet d'adapter le contrepoids aux différentes densités des produits de remplissage.

Il est bien entendu que la présente invention n'a été décrite et représentée qu'à titre d'exemple préférentiel et qu'on pourra apporter des équivalences techniques à ses éléments constitutifs sans pour autant sortir du cadre de ladite invention tel que ci-après revendiqué.

## Revendications

1. Mécanisme de dosage et d'équilibrage de la charge totale d'un récipient en cours de remplissage, comportant un balancier mobile en rotation autour d'un axe horizontal fixe formant levier du premier genre, sur l'extrémité du premier bras (10a) duquel prend appui l'extrémité d'une tige verticale guidée en translation axiale et dont l'autre extrémité est solidaire de la face inférieure du plateau de réception du récipient en cours de remplissage, caractérisé par le fait que le second bras est formé en deux parties articulées l'une sur l'autre, la première (10b) étant directement solidaire du premier bras (10a) et mobile en rotation en même temps que lui autour de l'axe (X-X) du balancier et munie, à son extrémité libre, d'une glissière (16) dans laquelle peut coulisser un contrepoids (19) articulé en rotation autour d'un axe horizontal parallèle à l'axe (X-X) du balancier, le palier formant support de l'axe dudit contrepoids (19) étant muni de moyens lui permettant de coulisser dans ladite glissière et étant lié à une pièce (10c) formant la seconde partie du second bras de balancier, laquelle pièce comporte, à son extrémité libre opposée à celle munie dudit palier, un premier coulisseau (21) mobile en translation le long d'un guide (20) rectiligne, ledit guide (20) étant disposé dans un plan vertical perpendiculaire aux axes de rotation du balancier et du contrepoids (19) et ayant une inclinaison de valeur prédéterminée, fonction de la quantité de produit à déverser dans chaque récipient, les longueurs des bras du balancier, d'une part, le poids du contrepoids (19) et l'inclinaison du guide (20) coopérant avec le second bras étant choisis de telle manière que les moments des forces agissant sur chacun desdits bras soient à tout instant sensiblement égaux.

2. Mécanisme de dosage et d'équilibrage selon la revendication 1, caractérisé par le fait que l'inclinaison du guide (20) est réglable et qu'à cet effet, son extrémité inférieure est articulée en rotation autour d'un axe fixe parallèle à l'axe de rotation (X-X) du balancier et que son extrémité supérieure coopère à la fois, d'une part avec un second coulisseau (23) mobile le long d'une glissière horizontale rectiligne d'axe orthogonal à l'axe (X-X) de rotation du balancier et, d'autre part, par l'intermédiaire d'une pièce (22) solidaire du coulisseau (23), mobile en rotation autour d'un axe (X3-X3) parallèle à l'axe de rotation (X-X) du balancier, avec un guidage rectiligne ménagé dans ladite pièce.

## Claims

1. A device for metering and balancing the total load of a container during filling, comprising a beam rotatable about a fixed horizontal axis constituting a simple lever, on the end of the first arm (10a) of which rests the end of a vertical rod guided for axial movement and of which the other end is affixed to the

# 0 007 411

inside surface of the platform supporting the container during filling, characterised in that the second arm is made up of two mutually pivoted parts the first (10b) being directly attached to the first arm (10a) and rotatable simultaneously therewith about the axis (X-X) of the beam and provided, at its free end, with a rail (16) in which may slide a counter-weight pivoted (19) for rotation about a horizontal axis parallel to the axis (X-X) of the beam, the bearing acting as the support of the axis of said counter-weight (19) being provided with means for allowing it to slide in the rail and being connected to an element (10c) forming the second part of the second arm of the beam, which part comprises, at its free end opposed to that provided with the bearing, a first slide (21) movable along a straight guide (20), said guide (20) being disposed in a vertical plane perpendicular to the axis of rotation of the beam and the counter-weight (19) and being inclined at a predetermined angle related to the amount of product to be discharged into each container, the lengths of the arms of the beam and the weight of the counter-weight (19) and the slope of the guide (20) co-operating with the second arm being selected so that the moments of the forces acting on each of said arms are at all times sustantially equal.

2. A metering and balancing device according to Claim 1, characterized in that the slope of the guide (20) is adjustable and that for this purpose, its lower extremity is pivoted for rotation about a fixed axis parallel to the axis of rotation (X-X) of the beam and that its upper end co-operates both with a second sliding element (23) movable along a straight horizontal rail with its axis perpendicular to the axis (X-X) of rotation of the beam, and via a means (22) affixed to the sliding element (23), rotatable about an axis (X3-X3) parallel to the axis of rotation (X-X) of the beam, with a straight guide provided on said means.


## Ansprüche

1. Vorrichtung für die Dosierung und den Gewichtsausgleich der Gesamtladung eines Behälters während seinem Auffüllen, mit einem einen einfachen Hebel bildenden, um eine waagerechte Achse drehbaren Waagebalken, wobei das Ende einer senkrechten achsial geführten Stange auf dem Ende eines ersten Armes (10a) des Waagebalkens ruht und das andere Ende der Stange mit der Unterseite der den aufzufüllenden Behälter tragenden Plattform verbunden ist, dadurch gekennzeichnet, dass der zweite Arm aus zwei gelenkig miteinander verbundenen Teilen gebildet ist, wobei der erste Teil (10b) unmittelbar mit dem ersten Arm (10a) verbunden und mit demselben auf der Achse (X-X) des Waagebalkens drehbar ist, und an seinem freien Ende mit einer Gleitbahn (16) ausgestattet ist, in welcher ein auf einer zur Achse (X-X) des Waagebalkens gleichlaufenden Achse drehbar angeordnetes Gewicht (19) laufen kann, wobei das die Achse des Gewichts (19) tragende Lager mit Mitteln ausgestattet ist, die ihm gestatten, in dieser Gleitbahn zu laufen und mit einem Stück, (10c) verbunden ist, das den zweiten Teil des zweiten Armes des Waagebalkens bildet, wobei dieses Stück an dem seinem mit dem Lager ausgestatteten entgegengesetzten freien Ende mit einem ersten Gleitstück (21) ausgestattet ist, das entlang einer geraden Führungsbahn (20) gleiten kann, wobei diese Führungsbahn (20) dem in jedem Behälter zu füllenden Gewicht entsprechend schräg in einer vertikalen, zu den Drehachsen des Waagebalkens und des Gewichts (19) senkrechten Ebene liegt, wobei die Länge der Arme des Waagebalkens, das Gewicht (19) und die Schrägstellung der Führungsbahn (20) mit dem zweiten Arm in solcher Weise mitwirken, dass die Momente der auf die Arme wirkenden Kräfte jederzeit ungefähr gleich sind.

2. Vorrichtung nach Anspruch 1, dadurch gekennzeichnet, dass die Schrägstellung der Führungsbahn (20) einstellbar ist, und dass zu diesem Zweck ihr unteres Ende auf einer festen, mit der Achse (X-X) des Waagebalkens gleichlaufenden Achse drehbar ist und dass ihr oberes Ende einerseits mit einem zweiten Gleitstück (23), das entlang einer geraden waagerechten Gleitbahn beweglich ist, deren Achse rechtwinklig zur Achse (X-X) des Waagebalkens ist, und anderseits mit einem Stück (22), das mit dem Gleitstück (23) verbunden ist, welches auf einer zur Achse (X-X) des Waagebalkens gleichlaufenden Achse (X3-X3) drehbar ist, in einer in diesem Stück vorhandenen geraden Führung zusammenwirkt.

8

FIG. 1

FIG.2

FIG.3

FIG.4

FIG.5

FIG.6